# EUROPEAN PATENT SPECIFICATION

(11) **EP 3 398 879 B1**
(45) Date of publication and mention of the grant of the patent: **30.06.2021**
(21) Application number: 17169565.3
(22) Date of filing: 04.05.2017
(51) Int. Cl.: B65D 88/12, A47B 81/00, E05B 73/00, B65G 1/02, G06Q 10/00

(54) **CABINET FOR STORING GOODS**
SCHRANK ZUR LAGERUNG VON WAREN
ARMOIRE POUR LE STOCKAGE DE MARCHANDISES

(43) Date of publication of application: 07.11.2018
(73) Proprietor: ESE World B.V., 6199 AM Maastricht-Airport (NL)
(72) Inventor: Jensen, Kjeld, 8410 Rönde (DK)
(74) Representative: Müller, Thomas

(56) References cited:
- EP-A2- 1 565 009
- CH-A5- 694 924
- CN-B- 103 900 336
- DE-A1- 2 530 561
- KR-A- 20160 047 852
- US-A- 4 991 912
- US-A1- 2006 055 290
- US-A1- 2011 060 693
- US-A1- 2015 013 400

## Description

The present invention relates to a cabinet for storing goods. However, the present invention is not limited to the storage of specific types of goods. In particular, the present invention is directed to a cabinet for storing containers. Furthermore, the present invention is directed to a system for storing containers.

Cabinets for storing any kinds of goods are widely known in the prior art. In general, such cabinets comprise a cabinet housing, which borders an interior space. This interior space is used to store goods, containers for example. Inside the cabinet housing one or more base plates are provided on which the goods to be stored can be placed. Usually such cabinet housings are provided with one or more doors which allow the insertion of goods into the interior space as well as the removal of stored goods out of the interior space.

Such a cabinet is disclosed in DE 92 00 323 U1 for example. This known cabinet comprises a cabinet housing having a front wall, a rear wall and two side walls, which walls delimit an interior space for storing different types of goods. In order to facilitate the insertion and removal of goods the cabinet comprises a front door as well as an additional door which is provided in one of the side walls. A similar solution is disclosed in DE 25 30 561 A1. US 2015/00013400A1 discloses a refrigerator having a blocking device such that the doors may not be opened by unauthorised people. CH 694 924 A5 discloses a cabinet for storing goods, said cabinet having a divider plate being movably mounted inside the cabinet body US 4 991 912 A relates to a device for storing containers filled with compacted refuse until those containers can be picked up by a commercial hauler for ultimate disposal.

With regard to hazardous goods which may be stored in a cabinet it is essential to prevent that such goods can get accessed by unauthorised persons, when they are stored inside the cabinet.

Therefore, it is the object of the present invention to provide a cabinet which is capable of receiving, storing and collecting goods, in particular containers for picking up hazardous goods, said cabinet being further capable of preventing an unauthorised removal of goods being stored inside the cabinet.

In accordance with the present invention, this object is solved according to a first aspect of the invention by the cabinet with the features according to independent claim 1, and according to a second aspect of the present invention by the system according to independent claim 13.

Additional features and details of the present invention become apparent from the dependent claims, from the description and from the drawings.

Therein, features and details which are described in connection with one aspect according to the invention apply with respect to their disclosure in their entirety also to the other aspect according to the invention, so that statements made with respect to one aspect of the invention also apply to their full extent to the other aspect of the invention, and vice versa.

All different aspects of the present invention underlie the same common basic idea, that the cabinet comprises specific features which allow that the goods can be easily inserted into the cabinet and can be easily removed therefrom. At the same time, the cabinet comprises features which prevent any unauthorised removal of goods being stored inside the cabinet. Therefore, all different aspects of the present invention represent different embodiments for solving the same object.

According to all aspects the invention is directed to a cabinet for storing goods, in particular for temporarily storing goods. In particular a cabinet is a piece of furniture used for storing any kinds of goods. The present invention is not limited to storing any specific kinds of goods such that all kinds of goods can be stored in such a cabinet. Furthermore, different kinds of goods can be stored in the cabinet at the same time.

According to a preferred embodiment, the cabinet is used for storing containers, in particular for storing small containers. A container can be any kind of receptacle for holding goods. The cabinet according to the present invention is capable of storing containers of different sizes.

According to a very preferred embodiment of the present invention, the cabinet is used for storing hazardous goods containers. In such a case the containers to be stored in said cabinet are filled with dangerous goods. Therefore, it is essential that the cabinet is capable of preventing any unauthorised removal of containers from the cabinet. This goal is achieved by means of the following features of the cabinets according to the different aspects of the invention.

Pursuant to the first aspect of present invention the object is solved by a cabinet for storing goods, in particular by a hazardous goods cabinet for storing hazardous goods containers, said cabinet comprising the features of independent claim 1.

The cabinet comprises a cabinet housing which borders an interior space. That means that the housing covers and protects the interior space. For this purpose the cabinet housing comprises a wall or a number of wall segments, said wall or wall segments surrounding the interior space. The interior space serves to receiving and storing the goods to be stored, in particular the containers to be stored.

For this purpose, the cabinet comprises at least one storage device for storing the goods, said storage device being placed or formed inside the interior space. In general a storage device can be any kind of device which is capable of storing goods, containers for example. The storage device according to the present invention can be described as a storage level or storage layer as well. The storage device comprises a base plate for parking the goods. Such a base plate which can be a shelf for example, is formed in such a way that it is capable of storing goods which have been inserted into the cabinet.

For the purpose of inserting goods into the storage device the base plate of said storage device comprises a first insertion end, said first insertion end cooperating with an insertion opening being formed in the cabinet housing. This means that the first insertion end works or acts together with the insertion opening for the purpose of inserting goods into said storage device, in particular onto the base plate of the storage device. In particular, as seen from the direction of the insertion opening into the inside of the cabinet housing, the first insertion end of the base plate directly follows the insertion opening, in particular the plain defined or span by said insertion opening.

For the purpose of removing goods from the storage device, the base plate of said storage device comprises a second removal end being spaced from said first insertion end, in particular being provided at the opposite end of said base plate, said second removal end cooperating with a removal opening being formed in the cabinet housing. This means that the second removal end works or acts together with the removal opening for the purpose of removing goods from said storage device, in particular from the base plate of the storage device. In particular, as seen from the direction of the removal opening into the inside of the cabinet housing, the second removal end of the base plate directly follows the removal opening, in particular the plain defined or span by said removal opening.

The cabinet housing comprises a front wall, a rear wall, a first side wail and a second side wall, said side walls extending between the front wall and the rear wall. According to a preferred embodiment the cabinet housing has a quadrangular shape. In a very preferred embodiment, the cabinet housing has a rectangular shape, whereby the front wall and the rear wall are broad sides of the cabinet and the side walls are narrow sides of the cabinet, respectively.

The base plate of the storage device extends between both side walls, whereby the insertion opening is formed in the first side wall and the removal opening is formed in the second side wall. Therefore, the base plate extends between the insertion opening and the removal opening as well.

In order to avoid any unauthorized removal of goods, in particular of containers, which are parked or placed on the base plate of the storage device inside the interior space of the storage device, a closing device for closing the insertion opening is provided on the first side wall. And a closing device for closing the removal opening is provided on the second side wall. In general, the present invention is not limited to any specific type of closing device. It is the general function of such closing device that the insertion and removal openings can be closed and therefore locked. According to a preferred embodiment, such closing devices can be provided as a door or as a flap, which is mounted, in particular pivotally mounted or swivel mounted, on the side walls respectively.

The general function of such a cabinet according to the first aspect is as follows: For inserting a good, for example a container, into the cabinet the closing device, which closes the insertion opening, is activated such that the insertion opening is released. For example, the door or flap closing the insertion opening gets switched or swung open. The good to be stored, the container for example, can be inserted and parked on the base plate of the storage device. At the opposite side wall, which incorporates the removal opening, the stored good, the stored container for example, can be removed. For this purpose, the closing device, which closes the removal opening, is released. For example, the door or flap closing the removal opening gets switched or swung open. The stored good, the stored container for example, can now be removed from the base plate of the storage device. Once the good has been inserted or removed the closing device is activated again such that the insertion or removal opening gets closed again. For example, the door or flap gets switched or swung closed again.

In particular, the cabinet is equipped with side doors on the left side and on the right side, by means of which goods, for example containers, are inserted at one side, the right side for example, Furthermore, goods, for example containers are removed at the other side, the left side for example. However, the present invention is not limited to specific sides where the insertion and removal of goods takes place.

According to a preferred embodiment, the cabinet is provided for storing filled containers and empty containers at the same time. Filled containers can be inserted at one side, the right side for example, via the insertion opening. Empty containers can be removed or taken from the cabinet at the opposite side, the left side for example, via the removal opening.

According to a preferred embodiment at least one additional opening is provided in the cabinet housing. According to this embodiment, the additional opening is formed in the front wall and/or in the rear wall, said opening being closed by means of a closing device, in particular by means of a flap or a door. In an alternative embodiment, the front wall and/or the rear wall is arranged as an additional opening, said opening being closed by means of a closing device, in particular by means of a flap or a door. According to these embodiments the cabinet housing is preferably equipped with one or two front door(s) or flap(s) and/or one or two rear door(s) or flap(s), which are pivotally mounted or swivel mounted at the cabinet housing. By means of the at least one additional opening it is easily possible for the operator of the cabinet to insert or remove a greater number of goods, for example containers, inside the cabinet housing on the base plate of the storage device, in particular if the cabinet housing comprises more than one storage device as described in more detail further below. When the cabinet comprises such an additional opening, the operator of the cabinet can use this additional opening in the front wall and/or in the rear wall, whilst the regular users of the cabinet use the insertion opening in the first side wall to insert their goods into the cabinet and use the removal opening in the second side wall to remove their goods In such a case the surface area of the additional opening in the front wall and/or in the rear wall is a multiple of the surface areas of the insertion opening and the removal opening in the side walls.

In order to avoid any unauthorised removal of goods from the cabinet, the closing devices for closing the insertion opening and/or the removal opening and/or the at least one additional opening preferably comprise a locking device. The present invention is not limited to specific types of locking devices. The locking device has the general function that, when activated, it is not possible that the closed opening can get released, for example that the door or flap gets opened. According to preferred embodiments, the locking device can be provided as a door lock and/or as a magnetic device and/or as a screw device. A door lock, which may use a key, a code card reader, a keyboard for inserting a pin or the like, makes sure that the locked door can be used and opened by an authorized person only. For example, the locking device being a magnetic device can comprise one or more magnets, preferably two magnets. Such magnets can be mounted on the side wall and on the closing device and can be used to make sure that the closing devices, the doors or flaps for example, are not opening and closing in the wind. For example, by use of a screw device as a locking device it is possible to mount one or more screws through a small opening or a lock through the closing device to prevent vandalism of the cabinet, if necessary, for example during the new year's eve. By using such screw devices it is not possible to insert fireworks or the like into the cabinet. According to preferred embodiments, different types of locking devices can be used at the same time.

According to yet another preferred embodiment, the closing device for closing the insertion opening comprises a positioning element, in particular a block element or a profile element, on a surface being directed into the interior space of said cabinet housing, said positioning element being provided in such a manner that it is capable of positioning an inserted container inside the storage device. This positioning element makes sure that an inserted goods, an inserted container for example, will be correctly placed in the cabinet, in particular on the base plate of the storage device.

According to yet another preferred embodiment, the closing device for closing the removal opening comprises a retaining device on a surface being directed into the interior space of said cabinet housing or the closing device is provided as such a retaining element, said retaining device being provided in such a manner that it is capable of retaining an inserted container inside the storage device until the closing device has been completely opened. According to this embodiment, the closing device for closing the removal opening comprises a retaining device, or the closing device for closing the removal opening is adapted for performing the function of a retaining device. The retaining device, which can be provided as a retaining profile element for example, has the general function that a good, a container for example, which is stored inside the cabinet housing, cannot fall on the ground during the removal procedure from the cabinet housing. With regard to the stored good, a stored container for example, the retaining device generates some kind of a clamp function or a wedge function, which holds and retains the stored good inside the cabinet housing until the closing device has been completely and well-controlled opened.

Furthermore, the storage device comprises a divider device, in particular a divider plate or a divider face or a divider profile element, said divider device, in relation to said base plate, being movably mounted in said storage device, and that the divider device is provided in such a manner that the area between said divider device and the insertion end forms a first storage area for the uptake of a first type of goods and that the area between said divider device and the removal end forms a second storage area for the uptake of a second type of goods.

By means of this divider device, the storage device can be used for storing different types of goods, these different types of goods being separated from each other by means of said divider device. In case that the cabinet is used for storing containers, the divider device can be used to store filled containers and empty containers at the same time. In such a case the filled containers are separated from the empty containers by means of said divider device.

In general, the divider device is a member serving as a partition element between separate spaces or areas. The divider device is provided in such a manner that the area between the divider device and the insertion end forms a first storage area for the uptake of a first type of goods, filled containers for example, and that the area between said divider device and the removal end forms a second storage area for the uptake of a different type of goods, empty containers for example.

For example, the divider device can be provided as a divider plate or a divider face or a divider profile element. In a preferred embodiment, the divider device is provided as a divider plate.

The divider device, in relation to said base plate, is movably mounted in said storage device. According to a preferred embodiment, the divider device can be moved into the direction of the removal opening as well as into the direction of the insertion opening. According to a preferred embodiment the divider device can be moved between said insertion end and said removal end. That means that the divider device can be moved between a position which is defined by the insertion end of the base plate or which lies in a plain extending perpendicularly from the insertion end of the base plate, and a position which is defined by the removal end of the base plate or which lies in a plain extending perpendicular from the removal end of the base plate. Preferably the divider device can be moved along the longitudinal extension of the base plate.

According to a preferred embodiment the divider device can be moved in said storage device, along the base plate for example, until it reaches the removal side of the cabinet, the removal opening in the cabinet wall or the removal end of the base plate for example, and/or until it reaches the insertion side of the cabinet, the insertion opening in the cabinet wall or the insertion end of the base plate for example. In such a case the divider device is stopped by the respective cabinet wall, a side wall for example, when it reaches said cabinet wall.

According to a different embodiment, the divider device can be moved between two members of a blocking device as will be described in greater detail with regard to the third aspect of the present invention further below.

The present invention is not limited to specific embodiments, how such a movement of the divider plate can be achieved. In a preferred embodiment the storage device comprises a groove or a guiding rail for moving the divider device. In such a case the divider device is arranged at this groove or guiding rail and can be moved along the grove or guiding rail, preferably in both directions, that is in direction from the insertion opening to the removal opening, and vice versa.

The function of this divider device will now be explained by reference to a specific embodiment, in which the cabinet is used for storing filled containers as well as empty containers. At the beginning the storage device inside the cabinet housing of the cabinet is filled with empty boxes only. At this point, the divider device is located in the region or at the insertion opening formed in a wall of the cabinet housing in the region of the insertion end of the base plate. When a first container gets inserted into the storage device, the divider device is moved in the direction of the removal opening formed in a wall of the cabinet housing in the region of the removal end of the base plate. At the same time an empty container can be removed from the base plate of the storage device via said removal opening, being held by a retainer element as mentioned further above for example. If the divider device is moved, by means of further inserting filled containers, into a position in the area of the removal opening or the removal end of the base plate, which means that the last empty container has been removed from the base plate, no more filled containers can be inserted into the storage device. In such a case the cabinet is full or a second storage device has to be used as will be explained further below.

Furthermore, the storage device comprises a blocking device, said blocking device being provided in such a manner that it is capable of preventing a removal of a good being parked on the base plate of the storage device from said storage device in an activated mode and of allowing a removal of a good being parked on the base plate of the storage device from said storage device in a deactivated mode.

The blocking device is a device which obstructs something by placing obstacles in the way. According to the present invention a blocking device in particular is a device that obstructs goods being stored in the storage device of the cabinet from being removed from the storage device, in particular by means of at least one member, which functions as an obstacle for the goods. The blocking device is provided in such a manner that it is capable of preventing a removal of a good being parked on the base plate of the storage device from said storage device in an activated mode and of allowing a removal of a good being parked on the base plate of the storage device from said storage device in a deactivated mode.

The blocking device, which is part of the storage device and which is therefore mounted inside the cabinet housing, is provided in such a manner that it is capable of preventing the removal of a good, for example a container, in particular an empty container from the removal opening unless another good, for example a container, in particular a filled container is inserted through the insertion opening. Furthermore, the blocking device is provided in such a manner that it is adapted for preventing that any good which has been inserted into the storage device can be removed from the cabinet once it has been placed inside the cabinet.

The general function of such a blocking device will now be explained by reference of a specific embodiment, in which the cabinet is used for storing filled containers as well as empty containers. When a filled container gets inserted into the storage device inside the cabinet housing through the insertion opening, which is formed in the wall of the cabinet housing, the blocking device gets switched into the deactivated mode, which means that an empty container will be released and can be removed from the cabinet through the removal opening which is formed in the wall of the cabinet housing at the same time.

The activation and deactivation of the blocking device can be achieved by means of a trigger signal caused by operating a locking devices described further above. Pursuant to another embodiment the activation and deactivation of the blocking device can be achieved by means of a good, in particular by means of a container, which gets inserted into the cabinet. In such a case, the good directly cooperates with the blocking device. For example, the good, for example the container, may have a portion, a lid for example, said portion having a member or being formed in a way that it can directly interact with the blocking device, by means of a protrusion for example.

According to the present invention, the blocking device is provided as a lever system. In a preferred embodiment the lever system can be a spring-loaded lever system or a gravity-loaded lever system.

The lever system comprises two lever elements which are mounted spaced apart from each other. However, both lever elements are coupled to one another, which is realized by means of a coupling device. In a preferred embodiment the coupling device can be provided as a coupling rod or the like.

In relation to the base plate, a first part of the blocking device, a first lever element for example, is arranged in said storage device in the region or in the vicinity of said insertion end. Furthermore, in relation to said base plate, a second part of the blocking device, a second lever element for example, is arranged in said storage device in the region or in the vicinity of said removal end. Preferably the second part of the blocking device can be movably arranged at said storage device. In particular this movement can be realized in accordance with the movement of the divider device. In such a case the second part of the blocking device can be moved into the direction of the removal opening of the cabinet wall and/or the removal end of the base plate of the storage device. According to this embodiment it is advantageously provided that the second part of the blocking device is movably coupled to the first part of the blocking device, by means of a telescopic connection, in particular a spring-loaded telescopic connection for example. In this case the second part of the blocking device can be moved by means of insertion of goods via the insertion opening, until the second part of the blocking device reaches and abuts the cabinet wall at the removal side which is the side where the removal opening is provided. Preferably, both parts of the blocking device, both lever elements for example, delimit a space in which goods, for example containers, can be stored or parked. When the cabinet is used for storing filled containers as well as empty containers at the same time, both lever elements delimit a space in which empty containers as well as filled containers can be stored at the same time. In such a case a divider device as described further above can be used in order to separate the filled containers from the empty containers. In such a case the divider device, as seen from the direction of the insertion opening and the removal opening, is spatially provided in said storage device inside the blocking device, in particular inside the lever system between the lever elements. That means that the divider device is encompassed by the blocking device or by parts of the blocking device, by the lever elements for example.

When using an aforementioned lever system as a blocking system, the insertion of a filled container may deactivate the lever system, which means that the lever elements are moved into a position which allows to insert a filled container into the storages device via the insertion opening and, at the same time, which allows to remove an empty container from the storage device via the removal opening. Due to the fact that both lever elements are coupled with one another, the movement of the first lever element automatically causes a similar movement of the second lever element. In the deactivated mode, in which the first lever element has been moved into a position in which a filled container can be inserted into the storage device, the second lever element has been brought into a position in which an empty container can be moved beneath said second lever element and then removed from the storage device.

When the last empty container has been removed from the base plate of the storage device and when a divider device as mentioned further above is used, according to a preferred embodiment, the divider device contacts the side wall of the cabinet in the area of the removal opening as explained further above with regard to the second aspect of the present invention. According to a different embodiment, the divider device contacts the second lever element and is stopped by the second lever element. In both cases, no more filled containers can be inserted into the storage device.

If a filled container has been successfully inserted into the storage device the lever system gets activated again, such that neither an empty container, nor a filled container can be removed from the storage device. For the latter case the first lever element preferably has a very specific shape. According to a preferred embodiment, the first lever element comprises an edge being inclined to the horizontal line, and that in particular the first lever element is connected with a first side to the coupling device and comprising said edge being inclined to the horizontal line at a second side, said second side being spaced, in particular being opposite, to said first side. Preferably, the second lever element, which might serve as a stop-plate for a divider device, comprises a contact surface for goods or for a divider device, said contact surface in particular running parallel to the vertical line. This contact surface can work or serves as a stop-device that secures that it is not possible to insert more filled containers if there are no more empty containers available on the base plate of the storage device.

According to the present invention the cabinet comprises at least one storage device, However, the present invention is not limited to a specific number of storage devices, which are mounted or provided inside the storage device, In a preferred embodiment, two or more storage devices for storing containers are provided or formed inside the interior space of the cabinet housing , in particular adjacent to one another, for example on top of each other, whereby each of the storage devices comprises a base plate for parking the goods, whereby, for the purpose of inserting containers, each base plate of each storage device comprises a first insertion end, said first insertion end cooperating with an insertion opening being formed in the cabinet housing. According to one preferred embodiment, one single insertion opening for all of the storage devices is formed in said cabinet housing. According to another preferred embodiment, one individual insertion opening for each storage device is formed in said cabinet housing. Each base plate of each storage device comprises a second removal end being spaced from said first insertion end, said second removal end cooperating with a removal opening being formed in the cabinet housing for the purpose of removing goods from the storage device, According to a preferred embodiment, one single removal opening for all of the storage devices is formed in the cabinet housing. According to another preferred embodiment, one individual removal opening for each storage device is formed in said cabinet housing.

In particular, each insertion opening and each removal opening comprises a closing device, in particular a flap or a door. With this respect full reference is made to the respective description of closing devices in accordance with the first aspect of the present invention.

According to yet another preferred embodiment, at least one guiding element, in particular a guiding rail, for guiding inserted containers inside the cabinet housing is provided on at least one surface of the cabinet housing, said surface being an inner surface directed to the interior space of the cabinet housing. In particular such guiding rails can be mounted on the inner surface of a front wall and/or of a rear wall of the cabinet housing. Such guiding elements help to ensure that the goods, in particular the containers inside the cabinet housing are kept upright and do not fall over on the base plates. Preferably the guiding element has the same alignment as the base plate(s) of the storage device(s).

In a preferred embodiment a fastening device, in particular one or two fastening rails, for fastening the cabinet to a wall is provided on at least one outwardly directed outer surface of said cabinet housing, in particular on the rear wall of the cabinet housing. By means of such a fastening device it is possible to hang up and to mount the cabinet onto a wall. Furthermore, the fastening devices fix a correct distance to the wall, making it possible to operate any closing devices, for example doors or flaps; mounted to the side walls.

According to another preferred embodiment, one or more foot elements, which are in particular adjustable and/or movable, are provided on at least one outwardly directed outer surface of said cabinet housing, in particular on the bottom of the cabinet housing. So it is possible to make accurate settings of the cabinet on the floor. Preferred is a cabinet which incorporates features that have been freely chosen from a combination of more than one of the aspects of the present invention, in particular from a combination of aspects one and two or of aspects one and three, or of aspects two and three, or of aspects one, two and three.

Pursuant to the second aspect of present invention the object is solved by a system for storing containers, in particular for storing hazardous goods containers. The system comprises a cabinet in accordance with the first aspect of the invention as described further above. Therefore, the disclosure of the first aspect applies with respect to the disclosure in entirety also to the system according to the invention, so that all of the statements made with respect to first aspect of the invention also applies to its full extent to the system according to the second aspect of the invention, and vice versa. Furthermore, the system comprises a number of containers, said containers being adapted for being stored, in particular for being temporarily stored, inside said cabinet.

The present invention is not limited to a specific number of storage devices or to a specific number of goods or containers being stored therein. Furthermore, the container sizes can vary with respect to the dimensions of the cabinet. Furthermore, the present invention is not delimited to a specific direction in which the goods are to be inserted into the cabinet. Furthermore, the present invention is adapted for storing different sizes of goods, different sized containers for example. According to a preferred embodiment, if the cabinet comprises two or more storage devices according to the present invention, each storage device can be provided for storing different sized goods.

For a better understanding of the present invention, a preferred embodiment of the present invention will now be described by way of an example with reference to the accompanying drawings, in which
- Figures 1 to 8: depict different views of a system for storing containers according to the present invention including a cabinet for storing containers and a number of containers being stored therein;
- Figure 9: depicts a detail of the cabinet according to the invention explaining the function of a blocking device; and
- Figure 10: depicts a detail of the cabinet according to the invention explaining the function of the divider device.

In the drawings, a system 100 for storing containers 50 is provided. The system 100 is used as a hazardous goods system for storing hazardous goods containers, which means that the containers are filled with hazardous goods.

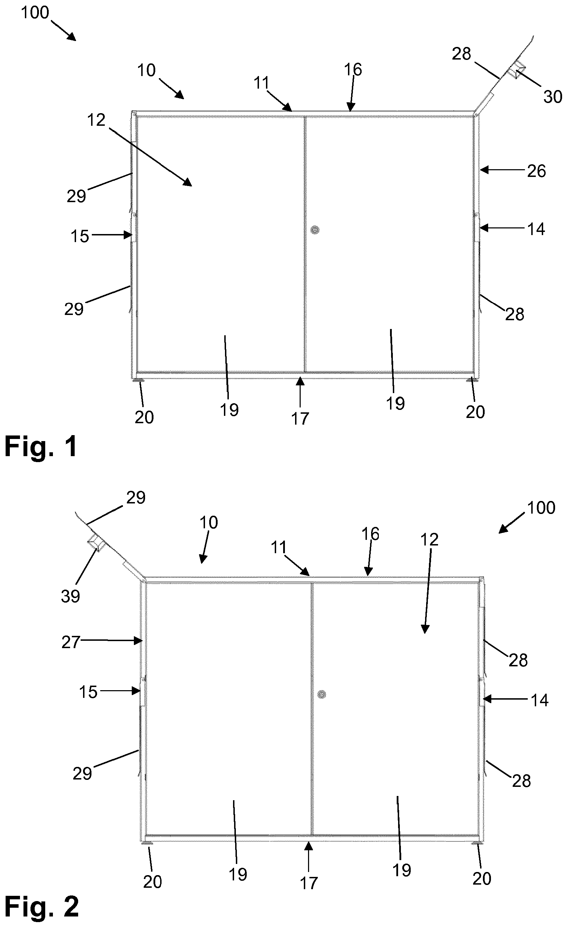

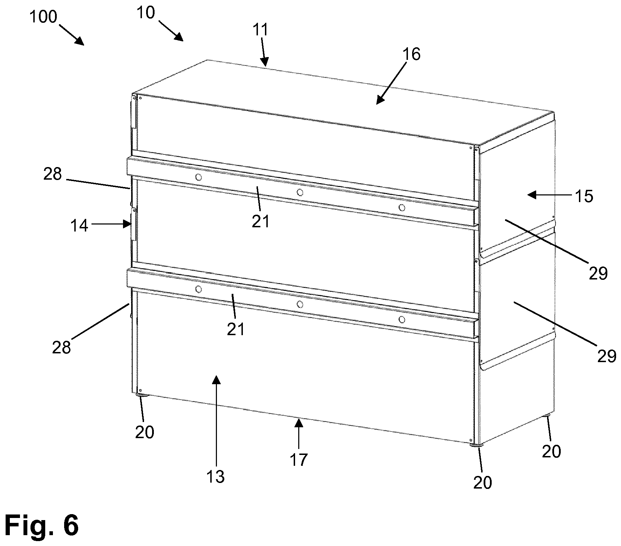

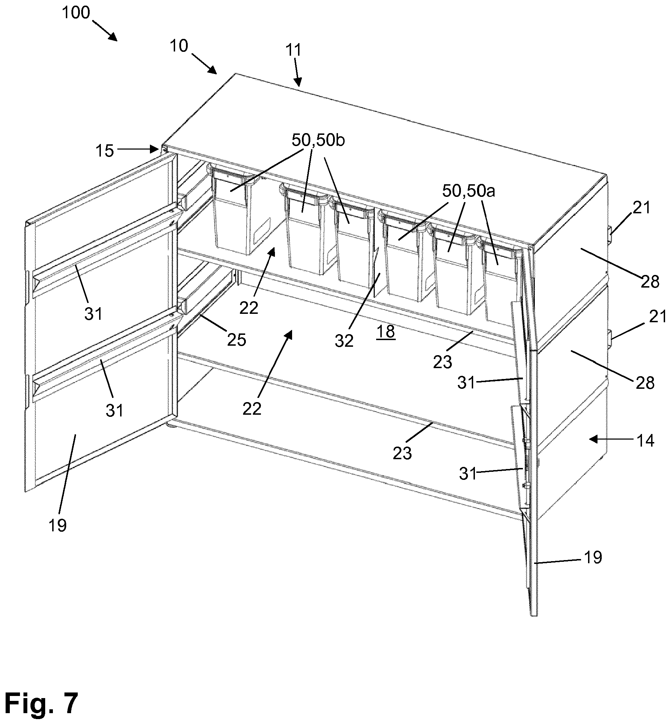

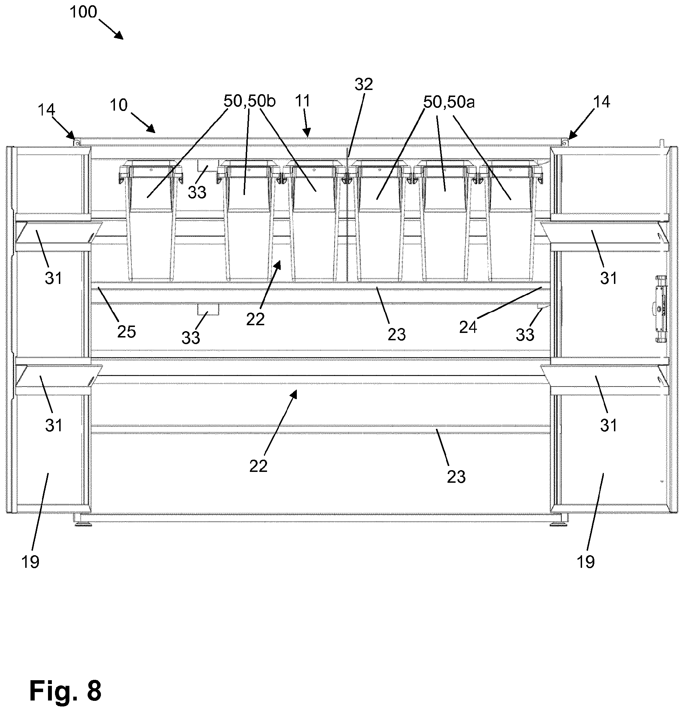

As depicted in Figures 1, 2, 6, 7 and 8, the system 100 comprises a cabinet 10, said cabinet 10 comprising a cabinet housing 11 for storing containers 50. The cabinet housing 11 has a rectangular shape including a front wall 12, a rear wall 13, a first side wall 14, a second side wall 15, a lid element 16 and a bottom 17. The different wall elements border an interior space 18. The front wall 12 comprises an opening which is closed by a closing device, said closing device being provided as two front doors 19.

On the rear wall 13, two fastening rails 21 are provided. By means of these fastening rails 21 it is possible to mount the cabinet 10 onto a wall. Furthermore, the fastening rails 21 fix a correct distance to the wall. On the bottom 17 of cabinet 10, at its corners, four foot elements 20 are provided to make accurate settings of the cabinet 10 on a floor.

Inside the interior space 18 the cabinet 10 comprises two storage devices 22 which are mounted adjacent to each other inside the cabinet housing 11. Each storage device 22 comprises a base plate 23 on which containers 50 can be parked or placed. Each base plate 23 comprises an insertion end 24 and a removal end 25 being opposite thereto. The base plates 23 extend between the side walls 14, 15 of the cabinet housing 11.

Inside the first side wall 14 two insertion openings 26 are provided, one insertion opening 26 for each storage device 22. Each insertion opening 26 is closed by a closing device, a flap 28 in the present case, said flap 28 being pivotally mounted on the first side wall 14. Inside the second side wall 15, two removal openings 27 are provided, one removal opening 27 for each storage device 22. Each removal opening 27 is closed by a closing device, a flap 29 in the present case, said flap 29 being pivotally mounted on the second side wall 15. The insertion openings 26 in the first side wall 14 correspond with the first insertion ends 24 of base plates 23. The removal openings 27 in the second side wall 15 correspond with the removal ends 25 of base plates 23.

On a surface being directed into the interior space 18 of the cabinet housing 11 of each flap 28 being mounted on the first side wall 14 an being used for closing the insertion opening 26, a positioning element 30, in particular a block element is mounted. This positioning element 30 makes sure that an inserted container 50 will be correctly placed on the base plate 23 of the storage device 22. On a surface being directed into the interior space 18 of the cabinet housing 11 of each flap 29 being mounted on the second side wall 15 and being used for closing the removal opening 27, a retaining device 39, in particular a retaining profile element, is provided. The retaining device 39 has the general function that a good, a container for example, which is stored inside the cabinet housing 11, cannot fall on the ground until the flap 29 has been completely and well-controlled opened.

According to the described embodiment, the cabinet 10 is provided for storing filled containers 50a and empty containers 50b at the same time. Filled containers 50a can be inserted at one side, the right side for example. Empty containers 50b can be removed or taken from the cabinet 10 at the opposite side, the left side for example.

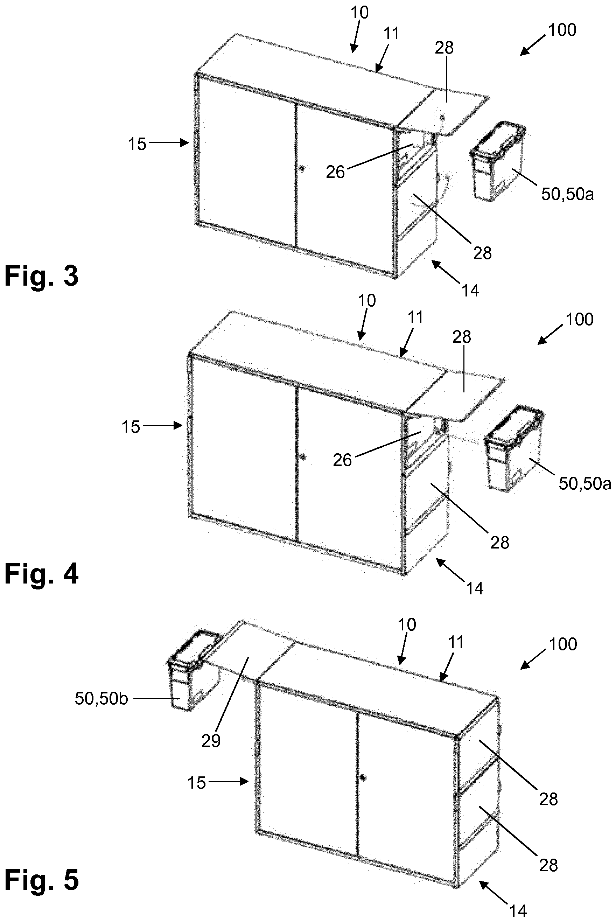

The general function of such a cabinet 10 is depicted in Figure 3 to 5 and can be described as follows:
For inserting a container 50, a filled container 50a in the present case, into the cabinet 10 the flap 28, which closes the insertion opening 26, is activated such that the insertion opening 26 is released. For example, the flap 28 closing the insertion opening 26 gets swung open. The filled container 50a can be inserted into the cabinet housing 11 and can be stored on the base plate of the storage device. At the opposite second side wall 15, which incorporates the removal opening 27, a stored container 50, an empty container 50b in the present case can be removed. For this purpose the flap 29, which closes the removal opening 27, gets swung open. The stored container 50b can now be removed from cabinet housing 11, in particular the base plate of the storage device. Once the containers 50a, 50b have been inserted or removed the insertion and removal openings 26, 27 get closed again.

In order to ensure that the containers 50, 50a, 50b are kept upright inside the cabinet housing 11 and do not fall over in the base plates 23, a number of guiding elements 31, in particular guiding rails are mounted on inner surfaces being directed into the interior space 18 of the cabinet housing 11 at the front doors 19 as well as at the rear wall 13.

In order to make sure that filled containers 50a and empty containers 50b can be stored on the base plate 23 at the same time, each storage device 22 comprises a divider device 32, a divider plate in the present embodiment. The divider device 32 is provided in such a manner that the area between the divider device 32 and the insertion end 24 of the base plate 23 forms a first storage area for the uptake of filled containers 50a, and that the area between said divider device 32 and the removal end 25 of the base plate 23 forms a second storage area for the uptake of empty containers 50b.

The divider device 32, in relation to base plate 23, is movably mounted in said storage device 22, for example by means of a guiding rail. That means that the divider device 32 can be moved between a position which is defined by the insertion end 24 of the base plate 23 and a position which is defined by the removal end 25 of the base plate 23.

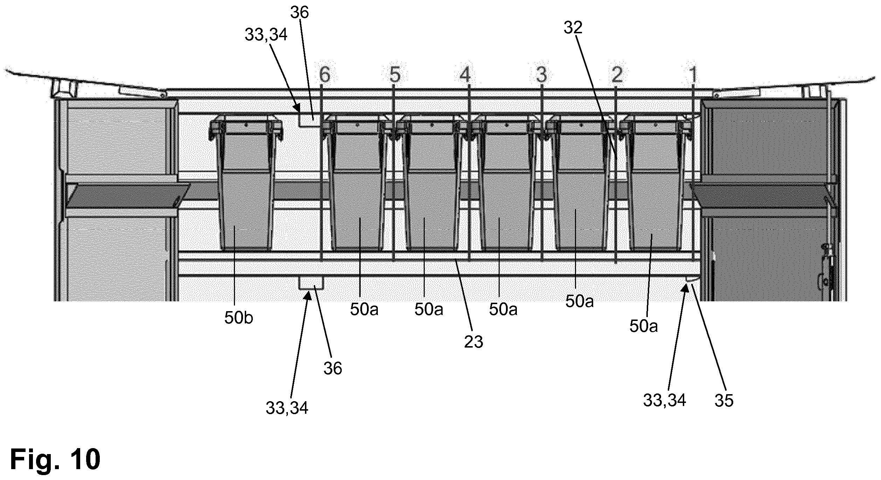

The function of this divider device 32 will now be explained with regard to Figure 10. At the beginning the storage device 22 inside the cabinet housing 11 of cabinet 10 is filled with empty containers 50b only. At this point, the divider device 32 is located in the region or at the insertion opening 26 formed in the first side wall 14 of the cabinet housing 11 in the region of the insertion end 24 of the base plate 23. This is depicted as position 1 in Figure 10. When a first filled container 50a gets inserted into the storage device 20, the divider device 32 is moved in the direction of the removal opening 27 formed in the second side wall 15 of the cabinet housing 11 in the region of the removal end 25 of base plate 23. At the same time an empty container 50b can be removed from the base plate 23 of the storage device 22 via said removal opening 27. This is depicted as positions 2, 3, 4 and 5 in Figure 10. If the divider device 32 is moved, by means of further inserting filled containers 50a, into an end-position, which means that the last empty container 50b has been removed from the base plate 23, no more filled containers 50a can be inserted into the storage device 22. In such a case the cabinet 10 is full or a second storage device 22 has to be used.

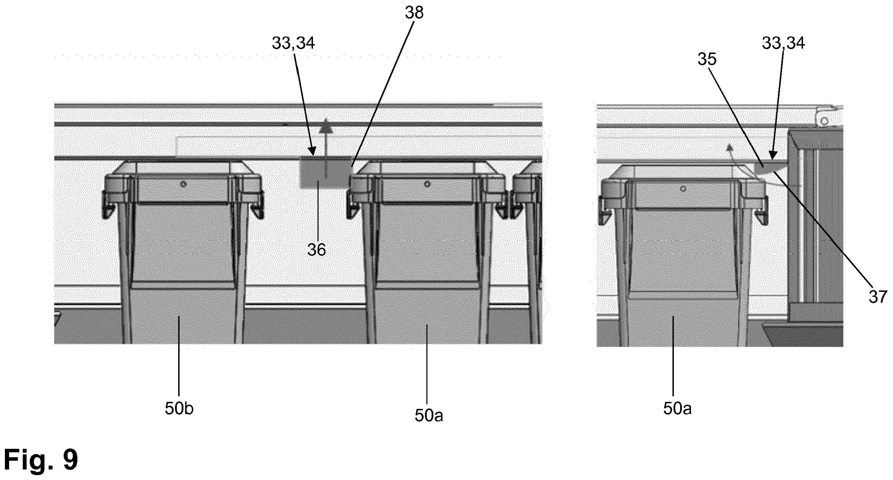

According to a preferred embodiment the divider device 22 can abut at the second side wall 15 of the cabinet housing 11. According to a different preferred embodiment, when the divider device 32 has reached its final position, position 6 for example, it may come into contact with a blocking device 33 which will now be described with regard to Figure 9.

The blocking device 33 is part of the storage device 22 and is therefore mounted inside the cabinet housing 11. It is the general function of this blocking device 33, that it prevents the removal of an empty container 50b from the removal opening 27 unless a filled container 50a is inserted through the insertion opening 26. Furthermore, the blocking device 33 is provided in such a manner that it is adapted for preventing that any filled container 50a which has been inserted into the storage device 22 can be removed from the cabinet 10 once it has been placed inside the cabinet 10.

For this purpose the blocking device 33 is provided as a lever system 34, said lever system 34 comprising a first lever element 35 and a second lever element 36. Both lever elements 35, 36 are mounted spaced apart from each other. However, both lever elements 35, 36 are coupled to one another by means of a coupling rod.

In relation to the base plate 23 of storage device 22, the first lever element 35 is arranged in the region or in the vicinity of the insertion end 25. The second lever element 36 is arranged in said storage device 22 in the region or in the vicinity of the removal end 25 of base plate 23. Therefore, both lever elements 35, 36 delimit a space in which containers 50 can be stored or parked. When the cabinet 10 is used for storing filled containers 50a as well as empty containers 50b at the same time, both lever elements 35, 36 delimit a space in which empty containers 50b as well as filled containers 50a can be stored at the same time. In such a case the divider device 3 separates the filled containers 50a from the empty containers 50b. In such a case the divider device 32, as seen from the direction of the insertion opening 25 and the removal opening 27, may be spatially provided inside the lever system 34 between the lever elements 35, 36. That means that the divider device 32 may be encompassed by the blocking device 33.

When using the lever system 34 as a blocking system 33, the insertion of a filled container 50a may deactivate the lever system 34, which means that the lever elements 35, 36 are moved into a position which allows to insert a filled container 50a into the storages device 22 via the insertion opening 26 and, at the same time, which allows to remove an empty container 50b from the storage device 22 via the removal opening 27. Due to the fact that both lever elements 35, 36 are coupled with one another, the movement of the first lever element 35 automatically causes a similar movement of the second lever element 36. In the deactivated mode, in which the first lever element 35 has been moved into a position in which a filled container 50a can be inserted into the storage device 22, the second lever element 36 has been brought into a position in which an empty container 50b can be moved beneath said second lever element 36 and then removed from the storage device 22.

If the last empty container 50b has been removed from the base plate 23 of the storage device 22, the divider device 32 contacts the inner surface of side wall 15 and is stopped when it reaches side wall 15, or, according to a different embodiment, the divider device 32 contacts the second lever element 36 and is stopped by the second lever element 36. In both cases, no more filled containers 50a can be inserted into the storage device 22 and no more containers can be removed from the storage device 22..

If a filled container 50a has been successfully inserted into the storage device 22 the lever system 34 gets activated again, such that neither an empty container 50b, nor a filled container 50a can be removed from the storage device 22. For this reason, the first lever element 35 comprises an edge 37 being inclined to the horizontal line. The first lever element 35 is connected with a first side to the coupling device and comprises said edge 37 being inclined to the horizontal line at a second side, said second side being spaced, in particular being opposite, to said first side.

The second lever element 36 serves as a stop-plate for the divider device 32 and comprises a contact surface 38 for containers 50 and for the divider device 32, said contact surface 38 running parallel to the vertical line. This contact surface 38 serves as a stop-device that secures that it is not possible to insert more filled containers 50a if there are no more empty containers 50b available on the base plate 23 of the storage device 22, since the movement of the divider device 32 is stopped by the contact surface 38 of second lever element 36.

**List of Reference Numerals**
- 10: Cabinet for storing containers
- 11: Cabinet housing
- 12: Front wall
- 13: Rear wall
- 14: First side wall
- 15: Second side wall
- 16: Lid element
- 17: Bottom
- 18: Interior space
- 19: Front door (closing device=
- 20: Foot element
- 21: Fastening rail
- 22: Storage device
- 23: Base plate
- 24: Insertion end
- 25: Removal end
- 26: Insertion opening
- 27: Removal opening
- 28: Flap (closing device)
- 29: Flap (closing device)
- 30: Positioning element
- 31: Guiding element
- 32: Divider device
- 33: Blocking device
- 34: Lever system
- 35: First lever element
- 36: Second lever element
- 37: Inclined edge of the first lever element
- 38: Contact surface of the second lever element
- 39: Retaining device

- 50: Container
- 50a: Filled container
- 50b: Empty container

- 100: System for storing containers

## Claims

1. A cabinet (10) for storing goods, in particular a hazardous goods cabinet for storing hazardous goods containers (50), said cabinet (10) comprising a cabinet housing (11) which borders an interior space (189, whereby at least one storage device (22) for storing the goods is placed or formed inside the interior space (18), said storage device (22) comprising a base plate (23) for parking the goods, whereby for the purpose of inserting goods into said storage device (22) the base plate (23) of said storage device (22) comprises a first end (24) being an insertion end, said first insertion end (24) cooperating with an insertion opening (26) being formed in the cabinet housing (11), **characterized in that** the base plate (23) of said storage device (22) comprises a second end (25) being a removal end and being spaced from said first end (24), said second end (25) cooperating with a removal opening (27) being formed in the cabinet housing (11) for the purpose of removing goods from said storage device (22), that the cabinet housing (11) comprises a front wall (12), a rear wall (13), a first side wall (14) and a second side wall (15), that the base plate (23) of said storage device (22) extends between both side walls (14, 15), that the insertion opening (26) is formed in the first side wall (14) and the removal opening (27) is formed in the second side wall (15),
that a closing device for closing the insertion opening (26), in particular a flap (28) or a door, is provided on the first side wall (14), and that a closing device for closing the removal opening (27), in particular a flap (29) or a door, is provided on the second side wall (15), that the storage device (22) comprises a divider device (32), in particular a divider plate or a divider face or a divider profile element, said divider device (32), in relation to said base plate (23), being movably mounted in said storage device (22), and that the divider device (32) is provided in such a manner that the area between said divider device (32) and the first end (24) forms a first storage area for the uptake of a first type of goods and that the area between said divider device (32) and the second end (25) forms a second storage area for the uptake of a second type of goods, and that the storage device (22) comprises a blocking device (33), said blocking device (33) being provided in such a manner that it is capable of preventing a removal of a good being parked on the base plate (23) of the storage device (22) from said storage device (22) in an activated mode and of allowing a removal of a good being parked on the base plate (23) of the storage device (22) from said storage device (22) in a deactivated mode, said blocking device (33) being provided as a lever system (34), said lever system (34) comprising two lever elements (35, 36) being spaced from one another, said lever elements (35, 36) being coupled to each other by means of a coupling device, wherein in relation to said base plate (23), a first lever element (35) is arranged in said storage device (22) in the region or in the vicinity of said insertion end (24) and wherein, in relation to said base plate (23), a second lever element (36) is arranged in said storage device (22) in the region or in the vicinity of said removal end (25).

2. The cabinet according to claim 1, further **characterized in that** an additional opening is formed in the front wall (12) and/or in the rear wall (13), said opening being closed by means of a closing device, in particular by means of a flap or a door (19), or that the front wall (12) and/or the rear wall (13) is arranged as an opening, said opening being closed by means of a closing device, in particular by means of a flap or a door (19).

3. The cabinet according to claim 1 or 2, further **characterized in that** the closing device comprises a locking device, said locking device being particularly provided as a door lock and/or as a magnetic device and/or as a screw device.

4. The cabinet according to anyone of claims 1 to 3, further **characterized in that** the closing device for closing the insertion opening (26) comprises a positioning element (30), in particular a profile element, on a surface being directed into the interior space (18) of said cabinet housing (11), said positioning element (30) being provided in such a manner that it is capable of positioning an inserted container (50) inside the storage device (22), and/or that the closing device for closing the removal opening (27) comprises a retaining device (39) on a surface being directed into the interior space (18) of said cabinet housing (11) or the closing device is provided as such a retaining element (39), said retaining device (39) being provided in such a manner that it is capable of retaining an inserted container (50) inside the storage device (22) until the closing device has been completely opened..

5. The cabinet according to claim 1, further **characterized in that** the storage device (32) comprises a groove or a guiding rail for moving the divider device (32).

6. The cabinet according to claim 1, further **characterized in that** the lever system (34) is provided as a spring-loaded or as a gravity-loaded lever system, and that the coupling device is provided as a coupling rod.

7. The cabinet according to claim 6, further **characterized in that** the first lever element (35) comprises an edge (37) being inclined to the horizontal line, and that in particular the first lever element (35) is connected with a first side to the coupling device and comprising said edge (37) being inclined to the horizontal line at a second side, said second side being spaced, in particular being opposite, to said first side, and/or that the second lever element (36) comprises a contact surface (38) for goods or for a divider device (32), said contact surface (38) in particular running parallel to the vertical line.

8. The cabinet according to anyone of the claims 1, 6 or 7,further **characterized in that** the divider device (32), as seen from the direction of the insertion opening (26) and the removal opening (27), is spatially provided in said storage device (22) inside the blocking device (33), in particular inside the lever system (34) between the lever elements (35, 36).

9. The cabinet according to anyone of claims 1 to 8, further **characterized in that** two or more storage devices (22) for storing goods are provided or formed inside the interior space (18) of the cabinet housing (11), in particular adjacent to each other, that each of the storage devices (22) comprises a base plate (23) for parking the goods, that, for the purpose of inserting goods, each base plate (23) of each storage device (22) comprises a first end (24), said first end (24) cooperating with an insertion opening (26) being formed in the cabinet housing (11), that one single insertion opening for all of the storage devices (22) or that one individual insertion opening (26) for each storage device (22) being formed in said cabinet housing (11), that each base plate (23) of each storage device (22) comprises a second end (25) being spaced from said first end (24), said second end (25) cooperating with a removal opening (27) being formed in the cabinet housing (11) for the purpose of removing goods from the storage device (22), that one single removal opening for all of the storage devices (22) or that one individual removal opening (27) for each storage device (22) being formed in said cabinet housing (11), and that in particular each insertion opening (26) and each removal opening (27) comprises a closing device, in particular a flap (28, 29) or a door.

10. The cabinet according to anyone of claims 1 to 9, further **characterized in that** the divider device (32) and/or the blocking device (33) of the storage device (32)is arranged at the base plate (23) of the storage device (22) and/or at a rack and/or at a base plate (23) of an adjacent storage device (22) and/or at a lid element (16) of the cabinet housing (22), said lid element (16) upwardly bordering the interior space (18) of the cabinet housing (11).

11. The cabinet according to anyone of claims 1 to 10, further **characterized in that** at least one guiding element (31), in particular a guiding rail, for guiding inserted goods inside the cabinet housing (11) is provided on at least one surface of the cabinet housing (11), said surface being an inner surface directed to the interior space (18) of the cabinet housing (11).

12. The cabinet according to anyone of claims 1 to 11, further **characterized in that** a fastening device, in particular a fastening rail (21), for fastening the cabinet (10) to a wall is provided on at least one outwardly directed outer surface of said cabinet housing (11), and/or that one or more foot elements (20), which are in particular adjustable and/or movable, are provided on at least one outwardly directed outer surface of said cabinet housing (11).

13. A system (100) for storing containers (50), in particular for storing hazardous goods containers, said system (100) comprising a cabinet (10) according to anyone of claims 1 to 12, and a number of containers (50), said containers (50) being adapted for being stored, in particular for being temporarily stored, inside said cabinet (10).

## Patentansprüche

1. Schrank (10) zum Lagern von Gütern, insbesondere Gefahrgutschrank zum Lagern von Gefahrgutbehältern (50), wobei der Schrank (10) ein Schrankgehäuse (11) aufweist, das einen Innenraum (18) begrenzt, wobei mindestens eine Lagervorrichtung (22) zum Lagern der Güter innerhalb des Innenraums (18) angeordnet oder ausgebildet ist, wobei die Lagervorrichtung (22) eine Grundplatte (23) zum Abstellen der Güter aufweist, wobei zum Zwecke des Einführens von Gütern in die Lagervorrichtung (22) die Grundplatte (23) der Lagervorrichtung (22) ein erstes Ende (24) aufweist, welches ein Einführende ist, wobei das erste Einführende (24) mit einer Einführöffnung (26) kooperiert, die in dem Schrankgehäuse (11) ausgebildet ist,
**dadurch gekennzeichnet, dass** die Grundplatte (23) der Lagervorrichtung (22) ein zweites Ende (25) aufweist, welches ein Entnahmeende ist und welches beabstandet von dem ersten Ende (24) ist, wobei das zweite Ende (25) mit einer Entnahmeöffnung (27) kooperiert, die in dem Schrankgehäuse (11) zum Zwecke der Entnahme von Gütern aus der Lagervorrichtung (22) ausgebildet ist, dass das Schrankgehäuse (11) eine Vorderwand (12), eine Rückwand (13), eine erste Seitenwand (14) und eine zweite Seitenwand (15) aufweist, dass sich die Grundplatte (23) der Lagervorrichtung (22) zwischen beiden Seitenwänden (14, 15) erstreckt, dass die Einführöffnung (26) in der ersten Seitenwand (14) und die Entnahmeöffnung (27) in der zweiten Seitenwand (15) ausgebildet ist, dass eine Schließvorrichtung zum Verschließen der Einführöffnung (26), insbesondere eine Klappe (28) oder eine Tür, an der ersten Seitenwand (14) bereitgestellt ist, und dass eine Schließvorrichtung zum Verschließen der Entnahmeöffnung (27), insbesondere eine Klappe (29) oder eine Tür, an der zweiten Seitenwand (15) bereitgestellt ist, dass die Lagervorrichtung (22) eine Trennvorrichtung (32) aufweist, insbesondere eine Trennplatte oder eine Trennfläche oder ein Trennprofilelement, dass die Trennvorrichtung (32), in Bezug auf die Grundplatte (23), beweglich in der Lagervorrichtung (22) angeordnet ist, und dass die Trennvorrichtung (32) derart bereitgestellt ist, dass der Bereich zwischen der Trennvorrichtung (32) und dem ersten Ende (24) einen ersten Lagerbereich für die Aufnahme eines ersten Typs von Gütern bildet, und dass der Bereich zwischen der Trennvorrichtung (32) und dem zweiten Ende (25) einen zweiten Lagerbereich für die Aufnahme eines zweiten Typs von Gütern bildet, und dass die Lagervorrichtung (22) eine Blockiervorrichtung (33) aufweist, dass die Blockiervorrichtung (33) derart bereitgestellt ist, dass sie in der Lage ist, in einem aktivierten Modus eine Entnahme eines auf der Grundplatte (23) der Lagervorrichtung (22) abgestellten Gutes aus der Lagervorrichtung (22) zu verhindern, und in einem deaktivierten Modus eine Entnahme eines auf der Grundplatte (23) der Lagervorrichtung (22) abgestellten Gutes aus der Lagervorrichtung (22) zu gestatten, dass die Blockiervorrichtung (33) als ein Hebelsystem (34) bereitgestellt ist, dass das Hebelsystem (34) zwei Hebelelemente (35, 36) aufweist, die voneinander beabstandet sind, dass die Hebelelemente (35, 36) mittels einer Kopplungsvorrichtung miteinander verbunden sind, wobei, in Bezug auf die Grundplatte (23), ein erstes Hebelelement (35) in der Lagervorrichtung (22) in dem Bereich oder in der Nähe von dem Einführende (24) angeordnet ist, und wobei, in Bezug auf die Grundplatte (23), ein zweites Hebelelement (36) in der Lagervorrichtung (22) in dem Bereich oder in der Nähe von dem Entnahmeende (25) angeordnet ist.

2. Schrank nach Anspruch 1, weiterhin **dadurch gekennzeichnet, dass** in der Vorderwand (12) und/oder in der Rückwand (13) eine zusätzliche Öffnung ausgebildet ist, dass die Öffnung mittels einer Schließvorrichtung, insbesondere mittels einer Klappe oder einer Tür (19), verschlossen wird, oder dass die Vorderwand (12) und/oder die Rückwand (13) als eine Öffnung ausgebildet ist, wobei die Öffnung mittels einer Schließvorrichtung, insbesondere mittels einer Klappe oder einer Tür (19), verschlossen wird.

3. Schrank nach Anspruch 1 oder 2, weiterhin **dadurch gekennzeichnet, dass** die Schließvorrichtung eine Verriegelungsvorrichtung aufweist, wobei die Verriegelungsvorrichtung insbesondere als Türschloss und/oder als Magnetvorrichtung und/oder als Schraubvorrichtung bereitgestellt ist.

4. Schrank nach einem der Ansprüche 1 bis 3, weiterhin **dadurch gekennzeichnet, dass** die Schließvorrichtung zum Verschließen der Einführöffnung (26) ein Positionierungselement (30), insbesondere ein Profilelement, auf einer in den Innenraum (18) des Schrankgehäuses (11) gerichteten Oberfläche aufweist, wobei das Positionierungselement (30) derart bereitgestellt ist, dass es in der Lage ist, einen eingefügten Behälter (50) innerhalb der Lagervorrichtung (22) zu positionieren, und/oder dass die Schließvorrichtung zum Verschließen der Entnahmeöffnung (27) eine Haltevorrichtung (39) auf einer Oberfläche, die in den Innenraum (18) des Schrankgehäuses (11) gerichtet ist, aufweist, oder dass die Schließvorrichtung als ein solches Halteelement (39) bereitgestellt ist, wobei die Haltevorrichtung (39) derart bereitgestellt ist, dass sie in der Lage ist, einen eingefügten Behälter (50) innerhalb der Speichervorrichtung (22) zu halten, bis die Schließvorrichtung vollständig geöffnet wurde.

5. Schrank nach Anspruch 1, weiterhin **dadurch gekennzeichnet, dass** die Lagervorrichtung (32) eine Nut oder eine Führungsschiene zum Bewegen der Trennvorrichtung (32) aufweist.

6. Schrank nach Anspruch 1, weiterhin **dadurch gekennzeichnet, dass** das Hebelsystem (34) als federbelastetes oder als schwerkraftbelastetes Hebelsystem bereitgestellt ist, und dass die Kopplungsvorrichtung als Kopplungsstange bereitgestellt ist.

7. Schrank nach Anspruch 6, weiterhin **dadurch gekennzeichnet, dass** das erste Hebelelement (35) eine zur horizontalen Linie geneigte Kante (37) aufweist, und dass insbesondere das erste Hebelelement (35) mit einer ersten Seite mit der Kopplungsvorrichtung verbunden ist und die Kante (37) aufweist, die an einer zweiten Seite zur horizontalen Linie geneigt ist, wobei die zweite Seite beabstandet, insbesondere gegenüber, der ersten Seite ist, und/oder dass das zweite Hebelelement (36) eine Kontaktfläche (38) für Güter oder für eine Trennvorrichtung (32) aufweist, wobei die Kontaktfläche (38) insbesondere parallel zur vertikalen Linie verläuft.

8. Schrank nach einem der Ansprüche 1, 6 oder 7, weiterhin **dadurch gekennzeichnet, dass** die Trennvorrichtung (32), aus der Richtung der Einführöffnung (26) und der Entnahmeöffnung (27) gesehen, räumlich in der Lagervorrichtung (22) innerhalb der Blockiervorrichtung (33) bereitgestellt ist, insbesondere innerhalb des Hebelsystems (34) zwischen den Hebelelementen (35, 36).

9. Schrank nach einem der Ansprüche 1 bis 8, weiterhin **dadurch gekennzeichnet, dass** zwei oder mehr Lagervorrichtungen (22) zum Lagern von Gütern innerhalb des Innenraums (18) des Schrankgehäuses (11) bereitgestellt oder ausgebildet sind, insbesondere benachbart zueinander, dass jede Lagervorrichtung (22) eine Grundplatte (23) zum Abstellen der Güter aufweist, dass zum Zwecke des Einführens von Gütern jede Grundplatte (23) jeder Lagervorrichtung (22) ein erstes Ende (24) aufweist, wobei das erste Ende (24) mit einer Einführöffnung (26) kooperiert, die in dem Schrankgehäuse (11) ausgebildet ist, dass eine einzige Einführöffnung für alle Lagervorrichtungen (22) oder dass eine individuelle Einführöffnung (26) für jede Lagervorrichtung (22) in dem Schrankgehäuse (11) ausgebildet ist, dass jede Grundplatte (23) jeder Lagervorrichtung (22) ein zweites Ende (25) aufweist, das von dem ersten Ende (24) beabstandet ist, wobei das zweite Ende (25) zum Zwecke der Entnahme von Gütern aus der Lagervorrichtung (22) mit einer in dem Schrankgehäuse (11) ausgebildeten Entnahmeöffnung (27) kooperiert, dass eine einzige Entnahmeöffnung für alle Lagervorrichtungen (22) oder dass eine individuelle Entnahmeöffnung (27) für jede Lagervorrichtung (22) in dem Schrankgehäuse (11) ausgebildet ist, und dass insbesondere jede Einführöffnung (26) und jede Entnahmeöffnung (27) eine Schließvorrichtung, insbesondere eine Klappe (28, 29) oder eine Tür, aufweist.

10. Schrank nach einem der Ansprüche 1 bis 9, weiterhin **dadurch gekennzeichnet, dass** die Trennvorrichtung (32) und/oder die Blockiervorrichtung (33) der Lagervorrichtung (32) an der Grundplatte (23) der Lagervorrichtung (22) angeordnet ist und/oder an einem Gestell und/oder an einer Grundplatte (23) einer benachbarten Lagervorrichtung (22) und/oder an einem Deckelelement (16) des Schrankgehäuses (22), wobei das Deckelelement (16)) den Innenraum (18) des Schrankgehäuses (11) nach oben begrenzt.

11. Schrank nach einem der Ansprüche 1 bis 10, weiterhin **dadurch gekennzeichnet ist, dass** mindestens ein Führungselement (31), insbesondere eine Führungsschiene, zum Führen von eingefügten Gütern innerhalb des Schrankgehäuses (11) auf mindestens einer Oberfläche des Schrankgehäuse (11) bereitgestellt ist, wobei die Oberfläche eine Innenfläche ist, die auf den Innenraum (18) des Schrankgehäuses (11) gerichtet ist.

12. Schrank nach einem der Ansprüche 1 bis 11, weiterhin **dadurch gekennzeichnet, dass** an mindestens einer nach außen gerichteten Außenfläche des Schrankgehäuses (11) eine Befestigungsvorrichtung, insbesondere eine Befestigungsschiene (21), zum Befestigen des Schranks (10) an einer Wand bereitgestellt ist und/oder das eines oder mehrere Fußelemente (20), die insbesondere einstellbar und/oder beweglich sind, an mindestens einer nach außen gerichteten Außenfläche des Schrankgehäuses (11) bereitgestellt sind.

13. System (100) zum Lagern von Behältern (50), insbesondere zum Lagern von Gefahrgutbehältern, wobei das System (100) einen Schrank (10) nach einem der Ansprüche 1 bis 12 und eine Anzahl von Behältern (50) aufweist, wobei die Behälter (50) zur Lagerung, insbesondere zur temporären Lagerung, in dem Schrank (10) ausgebildet sind.

## Revendications

1. Armoire (10) pour stocker des marchandises, en particulier une armoire de marchandises dangereuses pour stocker des conteneurs de marchandises dangereuses (50), ladite armoire (10) comprenant un logement d'armoire (11) qui délimite un espace intérieur (189, selon laquelle au moins un dispositif de stockage (22) pour stocker les marchandises est placé ou formé à l'intérieur de l'espace intérieur (18), ledit dispositif de stockage (22) comprenant une plaque de base (23) pour parquer les marchandises, selon laquelle, aux fins de l'insertion de marchandises dans ledit dispositif de stockage (22), la plaque de base (23) dudit dispositif de stockage (22) comprend une première extrémité (24) qui est une extrémité d'insertion, ladite première extrémité d'insertion (24) coopérant avec une ouverture d'insertion (26) formée dans le logement d'armoire (11),
**caractérisée en ce que** la plaque de base (23) dudit dispositif de stockage (22) comprend une seconde extrémité (25) qui est une extrémité de retrait et qui est espacée de ladite première extrémité (24), ladite seconde extrémité (25) coopérant avec une ouverture de retrait (27) formée dans le logement d'armoire (11) aux fins du retrait de marchandises dudit dispositif de stockage (22), **en ce que** le logement d'armoire (11) comprend une paroi avant (12), une paroi arrière (13), une première paroi latérale (14) et une seconde paroi latérale (15), **en ce que** la plaque de base (23) dudit dispositif de stockage (22) s'étend entre les deux parois latérales (14, 15), **en ce que** l'ouverture d'insertion (26) est formée dans la première paroi latérale (14) et l'ouverture de retrait (27) est formée dans la seconde paroi latérale (15), **en ce qu'**un dispositif de fermeture pour fermer l'ouverture d'insertion (26), en particulier une trappe (28) ou une porte, est prévu sur la première paroi latérale (14), et **en ce qu'**un dispositif de fermeture pour fermer l'ouverture de retrait (27), en particulier une trappe (29) ou une porte, est prévu sur la seconde paroi latérale (15), **en ce que** le dispositif de stockage (22) comprend un dispositif de séparation (32), en particulier une plaque de séparation ou une face de séparation ou un élément profilé de séparation, ledit dispositif de séparation (32), par rapport à ladite plaque de base (23), étant monté de manière mobile dans ledit dispositif de stockage (22), et **en ce que** le dispositif de séparation (32) est prévu de telle manière que la zone entre ledit dispositif de séparation (32) et la première extrémité (24) forme une première zone de stockage pour l'utilisation d'un premier type de marchandises et **en ce que** la zone entre ledit dispositif de séparation (32) et la seconde extrémité (25) forme une seconde zone de stockage pour l'utilisation d'un second type de marchandises, et **en ce que** le dispositif de stockage (22) comprend un dispositif de blocage (33), ledit dispositif de blocage (33) étant prévu de telle manière qu'il est capable d'empêcher un retrait d'une marchandise parquée sur la plaque de base (23) du dispositif de stockage (22) depuis ledit dispositif de stockage (22) dans un mode activé et de permettre un retrait d'une marchandise parquée sur la plaque de base (23) du dispositif de stockage (22) depuis ledit dispositif de stockage (22) dans un mode désactivé, ledit dispositif de blocage (33) étant prévu en tant que système de levier (34), ledit système de levier (34) comprenant deux éléments de levier (35, 36) espacés l'un de l'autre, lesdits éléments de levier (35, 36) étant couplés l'un à l'autre au moyen d'un dispositif de couplage, dans laquelle, par rapport à ladite plaque de base (23), un premier élément de levier (35) est agencé dans ledit dispositif de stockage (22) dans la région ou à proximité de ladite extrémité d'insertion (24) et dans laquelle, par rapport à ladite plaque de base (23), un second élément de levier (36) est agencé dans ledit dispositif de stockage (22) dans la région ou à proximité de ladite extrémité de retrait (25).

2. Armoire selon la revendication 1, **caractérisée en outre en ce qu'**une ouverture additionnelle est formée dans la paroi avant (12) et/ou dans la paroi arrière (13), ladite ouverture étant fermée au moyen d'un dispositif de fermeture, en particulier au moyen d'une trappe ou d'une porte (19), ou **en ce que** la paroi avant (12) et/ou la paroi arrière (13) est agencée comme une ouverture, ladite ouverture étant fermée au moyen d'un dispositif de fermeture, en particulier au moyen d'une trappe ou d'une porte (19).

3. Armoire selon la revendication 1 ou 2, **caractérisée en outre en ce que** le dispositif de fermeture comprend un dispositif de verrouillage, ledit dispositif de verrouillage étant en particulier prévu en tant que serrure de porte et/ou en tant que dispositif magnétique et/ou en tant que dispositif à vis.

4. Armoire selon l'une quelconque des revendications 1 à 3, **caractérisée en outre en ce que** le dispositif de fermeture pour fermer l'ouverture d'insertion (26) comprend un élément de positionnement (30), en particulier un élément profilé, sur une surface dirigée dans l'espace intérieur (18) dudit logement d'armoire (11), ledit élément de positionnement (30) étant prévu de telle manière qu'il est capable de positionner un conteneur (50) inséré à l'intérieur du dispositif de stockage (22), et/ou **en ce que** le dispositif de fermeture pour fermer l'ouverture de retrait (27) comprend un dispositif de retenue (39) sur une surface dirigée dans l'espace intérieur (18) dudit logement d'armoire (11) ou le dispositif de fermeture est prévu comme un tel élément de retenue (39), ledit dispositif de retenue (39) étant prévu de telle manière qu'il est capable de retenir un conteneur (50) inséré à l'intérieur du dispositif de stockage (22) jusqu'à ce que le dispositif de fermeture soit complètement ouvert.

5. Armoire selon la revendication 1, **caractérisée en outre en ce que** le dispositif de stockage (32) comprend une rainure ou un rail de guidage pour déplacer le dispositif de séparation (32).

6. Armoire selon la revendication 1, **caractérisée en outre en ce que** le système de levier (34) est prévu en tant que système de levier à ressort ou à gravité, et **en ce que** le dispositif de couplage est prévu en tant que tige de couplage.

7. Armoire selon la revendication 6, **caractérisée en outre en ce que** le premier élément de levier (35) comprend un bord (37) incliné par rapport à la ligne horizontale, et **en ce qu'**en particulier le premier élément de levier (35) est relié par un premier côté au dispositif de couplage et comprend ledit bord (37) incliné par rapport à la ligne horizontale sur un second côté, ledit second côté étant espacé, en particulier opposé, audit premier côté, et/ou **en ce que** le second élément de levier (36) comprend une surface de contact (38) pour des marchandises ou pour un dispositif de séparation (32), ladite surface de contact (38) s'étendant en particulier parallèlement à la ligne verticale.

8. Armoire selon l'une quelconque des revendications 1, 6 ou 7, **caractérisée en outre en ce que** le dispositif de séparation (32), vu depuis la direction de l'ouverture d'insertion (26) et l'ouverture de retrait (27), est prévu spatialement dans ledit dispositif de stockage (22) à l'intérieur du dispositif de blocage (33), en particulier à l'intérieur du système de levier (34) entre les éléments de levier (35, 36).

9. Armoire selon l'une quelconque des revendications 1 à 8, **caractérisée en outre en ce que** deux ou plusieurs dispositifs de stockage (22) pour stocker des marchandises sont prévus ou formés à l'intérieur de l'espace intérieur (18) du logement d'armoire (11), en particulier de manière adjacente les uns aux autres, **en ce que** chacun des dispositifs de stockage (22) comprend une plaque de base (23) pour parquer les marchandises, **en ce que**, aux fins de l'insertion de marchandises, chaque plaque de base (23) de chaque dispositif de stockage (22) comprend une première extrémité (24), ladite première extrémité (24) coopérant avec une ouverture d'insertion (26) formée dans le logement d'armoire (11), **en ce qu'**une seule ouverture d'insertion pour tous les dispositifs de stockage (22) ou **en ce qu'**une ouverture d'insertion (26) individuelle pour chaque dispositif de stockage (22) est formée dans ledit logement d'armoire (11), **en ce que** chaque plaque de base (23) de chaque dispositif de stockage (22) comprend une seconde extrémité (25) espacée de ladite première extrémité (24), ladite seconde extrémité (25) coopérant avec une ouverture de retrait (27) formée dans le logement d'armoire (11) aux fins du retrait de marchandises depuis le dispositif de stockage (22), **en ce qu'**une seule ouverture de retrait pour tous les dispositifs de stockage (22) ou **en ce qu'**une ouverture de retrait (27) individuelle pour chaque dispositif de stockage (22) est formée dans ledit logement d'armoire (11), et **en ce qu'**en particulier chaque ouverture d'insertion (26) et chaque ouverture de retrait (27) comprend un dispositif de fermeture, en particulier une trappe (28, 29) ou une porte.

10. Armoire selon l'une quelconque des revendications 1 à 9, **caractérisée en outre en ce que** le dispositif de séparation (32) et/ou le dispositif de blocage (33) du dispositif de stockage (32) est agencé au niveau de la plaque de base (23) du dispositif de stockage (22) et/ou au niveau d'une étagère et/ou au niveau d'une plaque de base (23) d'un dispositif de stockage (22) adjacent et/ou au niveau d'un élément de couvercle (16) du logement d'armoire (22), ledit élément de couvercle (16) délimitant vers le haut l'espace intérieur (18) du logement d'armoire (11).

11. Armoire selon l'une quelconque des revendications 1 à 10, **caractérisée en outre en ce qu'**au moins un élément de guidage (31), en particulier un rail de guidage, pour guider des marchandises insérées à l'intérieur du logement d'armoire (11) est prévu sur au moins une surface du logement d'armoire (11), ladite surface étant une surface intérieure dirigée vers l'espace intérieur (18) du logement d'armoire (11).

12. Armoire selon l'une quelconque des revendications 1 à 11, **caractérisée en outre en ce qu'**un dispositif de fixation, en particulier un rail de fixation (21), pour fixer l'armoire (10) à une paroi est prévu sur au moins une surface extérieure dirigée vers l'extérieur dudit logement d'armoire (11), et/ou **en ce qu'**un ou plusieurs éléments de pied (20), qui sont en particulier réglables et/ou mobiles, sont prévus sur au moins une surface extérieure dirigée vers l'extérieur dudit logement d'armoire (11).

13. Système (100) pour stocker des conteneurs (50), en particulier pour stocker des conteneurs de produits dangereux, ledit système (100) comprenant une armoire (10) selon l'une quelconque des revendications 1 à 12, et un certain nombre de conteneurs (50), lesdits conteneurs (50) étant adaptés pour être stockés, en particulier pour être stockés temporairement, à l'intérieur de ladite armoire (10).
